# EUROPEAN PATENT APPLICATION

(11) **EP 4 481 241 A1**
(43) Date of publication of application: **25.12.2024**
(21) Application number: 23819927.7
(22) Date of filing: 09.06.2023
(51) Int. Cl.: F16H 63/18

(54) **TRANSMISSION**

(30) Priority: 09.06.2022 WO PCT/JP2022/023253
(71) Applicant: Yamaha Hatsudoki Kabushiki Kaisha, Iwata-shi, Shizuoka 438-8501 (JP)
(72) Inventor: OSAWA, Kenta, Iwata-shi, Shizuoka 438-8501 (JP); NAITO, Shinji, Iwata-shi, Shizuoka 438-8501 (JP); HOSHINA, Taiji, Iwata-shi, Shizuoka 438-8501 (JP); HIROSE, Ryotaro, Iwata-shi, Shizuoka 438-8501 (JP)
(74) Representative: Stöckeler, Ferdinand
(86) International application number: PCT/JP2023/021609
(87) International publication number: WO 2023/238947

(57) **Abstract**

A transmission (1) includes: a shift member (110) moving in an axial direction integrally with a slider (40) provided on a power transmission shaft (10); and a shift drum (130). The shift drum has an outer circumferential portion in which a guide groove (140) is formed, and a pin portion (114) of the shift member is provided in the guide groove. The shift drum includes a first contact portion (150) which is provided at the outer circumferential portion of the shift drum to be remote from the guide groove. The shift member includes a second contact portion (115) provided to be remote from the pin portion. The transmission (1) is arranged to move the shift member in the axial direction from the position to which the shift member has been guided due to the contact between the guide groove and the pin portion, because the second contact portion moves in the axial direction due to the contact between the first contact portion and the second contact portion when the shift drum rotates.

## Description

### [Technical Field]

The present teaching relates to a transmission, and particularly relates to a transmission including a shift drum.

### [Background Art]

A known transmission is arranged such that a slider provided on a power transmission shaft is moved in the axial direction by using a shift drum, in order to change a speed stage. A shift member connected to the slider includes a pin portion that is provided in a guide groove formed in the shift drum. The guide groove has slope surfaces that are tilted in the axial direction relative to the circumferential direction. As the pin portion relatively moves along the slope surface of the guide groove at the time of the rotation of the shift drum, the shift member and the slider move in the axial direction. As a result, a dog of the slider meshes with a dog of a shift gear provided on the power transmission shaft, or meshing of a dog of the slider with a dog of a shift gear provided on the power transmission shaft is canceled. In the known transmission, the shift member is moved in the axial direction by using only the guide groove of the shift drum and the pin portion of the shift member.

On the other hand, a transmission shown in FIG. 15 of Patent Literature 1 includes an auxiliary cam provided in a guide groove of a shift drum. The auxiliary cam is swingably provided at the shift drum. In the transmission of Patent Literature 1, the moving distance in the axial direction of the shift member is differentiated between shifting up and shifting down, by differentiating the swinging angle of the auxiliary cam between the shifting up and the shifting down.

### [Citation List]

### [Patent Literatures]

[Patent Literature 1] International Publication No. 2020/250535

### [Summary]

### [Technical Problem]

Transmissions are required to have high durability. Furthermore, transmissions may be required not to be large in size. In the transmission of Patent Literature 1, it is assumed that a mechanism for swinging the auxiliary cam is provided in the shift drum. This suppresses the upsizing of the transmission.

An object of the present teaching is to provide a transmission which includes a shift drum for moving a shift member, is capable of moving the shift member in the axial direction without having an auxiliary cam in a guide groove as in Patent Literature 1, and is capable of improving the durability of the transmission suppressing the upsizing of the transmission.

### [Solution to Problem]

A transmission of an embodiment of the present teaching is arranged as described below.

The transmission includes: a slider which is provided on a power transmission shaft on which a shift gear is provided, is provided to be movable in an axial direction, and is driven to move in the axial direction in order to change a speed stage; a shift member which is integrally movable with the slider in the axial direction; and a shift drum which has an outer circumferential portion having a guide groove in which a pin portion of the shift member is provided, and which is arranged to move the shift member in the axial direction in accordance with a position of the guide groove with which the pin portion makes contact, when the shift drum rotates about a rotational central axis in parallel to the axial direction.

The shift drum includes a first contact portion which is provided at the outer circumferential portion of the shift drum so as to be at a position remote from the guide groove and which is arranged to rotate integrally with the shift drum.

The shift member includes a second contact portion which is provided at a position remote from the pin portion, which is arranged to move in the axial direction integrally with the shift member, and which is arranged to move in the axial direction due to contact with the rotating first contact portion when the shift drum rotates in a first direction.

The guide groove has a wide portion which has a groove width in the axial direction which is wider than the width in the axial direction of the pin portion, in order to allow the pin portion to move in the guide groove in the axial direction when the second contact portion moves in the axial direction due to contact between the second contact portion and the first contact portion which is rotating on account of the rotation of the shift drum in the first direction.

The transmission is arranged to move the shift member in the axial direction from a position to which the shift member has been guided due to contact between the guide groove and the pin portion, because the second contact portion moves in the axial direction due to contact between the rotating first contact portion and the second contact portion when the shift drum rotates in the first direction.

According to this arrangement, the shift drum includes the guide groove and the first contact portion rotating integrally with the shift drum, whereas the shift member includes the pin portion provided in the guide groove and the second contact portion rotating in the axial direction integrally with the shift member. The transmission is arranged to move the shift member in the axial direction from the position to which the shift member has been guided due to the contact between the guide groove and the pin portion, because the second contact portion moves in the axial direction due to the contact between the first contact portion and the second contact portion when the shift drum rotates in the first direction. The first contact portion of the shift drum is provided at the outer circumferential portion of the shift drum to be remote from the guide groove. The second contact portion of the shift member is provided to be remote from the pin portion. It is therefore possible to provide the first contact portion and the second contact portion by utilizing an available space outside the outer circumferential portion of the shift drum in the radial direction. On this account, it is possible to provide the first contact portion and the second contact portion while suppressing the upsizing of the transmission. Furthermore, because the first contact portion and the second contact portion are provided by utilizing the available space, it is easy to secure the strength and rigidity of the first contact portion and the second contact portion while suppressing the upsizing of the transmission. On this account, the durability of the mechanism for moving the shift member in the axial direction can be easily improved as compared to a case where a mechanism for moving the shift member in the axial direction is provided in the guide groove and the shift drum as in Patent Literature 1. In this way, the durability of the transmission can be improved while upsizing of the transmission is suppressed, even though the shift member is movable in the axial direction by a structure different from the structure of Patent Literature 1 in which the auxiliary cam is provided in the guide groove.

A transmission of an embodiment of the present teaching may be arranged as described below.

The first contact portion or the second contact portion has a cam surface that is formed to convert a rotational force of the shift drum into a force in the axial direction.

The transmission is arranged to move the shift member in the axial direction from a position to which the shift member has been guided due to contact between the guide groove and the pin portion, because the second contact portion moves in the axial direction due to contact between the cam surface of the rotating first contact portion or the second contact portion and the second contact portion or the rotating first contact portion when the shift drum rotates in the first direction.

According to this arrangement, the shift member can be moved from the position to which the shift member has been guided by the contact between the guide groove and the pin portion, by utilizing the cam surface of the first contact portion or the second contact portion. It is therefore possible to suppress the upsizing of the transmission. When the second contact portion has the cam surface, the first contact portion can be formed to be smaller than the second contact portion having the cam surface. Furthermore, the moving distance in the axial direction of the shift member is significantly shorter than the outer circumferential length of the rotating shift drum. On this account, a space where a member can be provided is easily secured by adding a member to the shift member, as compared to a case where a member is added to the outer circumferential portion of the shift drum. When the second contact portion has the cam surface, the upsizing of the transmission is further suppressed as the second contact portion larger than the first contact portion is provided in the shift member.

A transmission of an embodiment of the present teaching may be arranged as described below.

The second contact portion is arranged to move in the axial direction due to contact with the rotating first contact portion, when shift down from an (n+1)-th speed stage to an n-th speed stage occurs by the rotation of the shift drum in the first direction, wherein n is a natural number equal to or more than 1.

The transmission is arranged to move the shift member in the axial direction from a position to which the shift member has been guided due to contact between the guide groove and the pin portion, because the second contact portion moves in the axial direction due to contact between the rotating first contact portion and the second contact portion when shifting down from the (n+1)-th speed stage to the n-th speed stage.

A transmission of an embodiment of the present teaching may be arranged as described below.

The shift member is arranged to move in the axial direction due to contact between the guide groove and the pin portion, when shift up from an (n-1)-th speed stage to the n-th speed stage occurs by the rotation of the shift drum in a second direction opposite to the first direction, wherein n is a natural number equal to or more than 2.

The first contact portion and the second contact portion are arranged such that, by the rotation of the shift drum in a second direction opposite to the first direction the shift up from the (n-1)-th speed stage to the n-th speed stage occurs (i) without movement in the axial direction of the second contact portion due to contact between the rotating first contact portion and the second contact portion or (ii) with movement in the axial direction of the second contact portion due to contact between the rotating first contact portion and the second contact portion, by a distance that is shorter than the distance of movement in the axial direction of the second contact portion due to contact between the first contact portion and the second contact portion when shifting down from the (n+1)-th speed stage to the n-th speed stage.

A transmission of an embodiment of the present teaching may be arranged as described below.

The transmission includes: two power transmission shafts including the power transmission shaft; shift gears which include the shift gear, which are provided on the two power transmission shafts, and each of which is rotatable relative to one of the two power transmission shafts and is immovable in the axial direction; sliders which include the slider, which are provided on the two power transmission shafts, each of which is integrally rotatable with one of the two power transmission shafts and movable in the axial direction, each of which includes a dog capable of meshing with a dog of a shift gear neighboring the each slider in the axial direction, and which are driven in the axial direction to change the speed stage; and shift members which include the shift member and which are integrally movable with the respective sliders in the axial direction.

The shift drum has the outer circumferential portion having guide grooves which include the guide groove and in which pin portions of the shift members are provided.

The transmission is arranged such that, when shift up from the (n-1)-th speed stage to the n-th speed stage occurs by the rotation of the shift drum in a second direction opposite to the first direction, the transmission is temporarily in a double-meshed state where two of the sliders simultaneously mesh with two shift gears of the shift gears by the dogs, wherein n is a natural number equal to or more than 2, and the transmission is arranged such that, when the transmission is in the double-meshed state, a force of canceling meshing by the dogs is generated in one of the two sliders.

According to this arrangement, when shifting up from the (n-1)-th speed stage to the n-th speed stage, the transmission is temporarily in the double-meshed state. The transmission is arranged so that, when the transmission become in the double-meshed state, a force of canceling meshing of the dog of one of the two sliders is generated. Seamless shift up is therefore achieved without interrupting the transmission of power. In such a transmission arranged to allow seamless shift up, it may be necessary to differentiate the moving distance in the axial direction of the shift member between the shift up and the shift down. This can be achieved by moving the shift member including the second contact portion in the axial direction by the contact between the first contact portion and the second contact portion, when shifting down.

In the present teaching and the embodiments, an axial direction is a direction in parallel to the rotational central axis of each of a power transmission shaft.

In the present teaching and the embodiments, a slider may include a gear. The slider may include two gears aligned in an axial direction. In the present teaching and the embodiments, a slider may not include a gear as in the slider of Patent Literature 1.

In the present teaching and the embodiments, a shift member includes at least a shift fork connected to a slider. In the present teaching and the embodiments, the shift member may be a shift fork. In this case, the shift fork includes a pin portion provided in a guide groove of a shift drum and a second contact portion. In the present teaching and the embodiments, the shift member may include the shift fork and at least one member different from the shift fork. In this case, the pin portion and the second contact portion may be provided at a member different from the shift fork. For example, the shift member may be constituted by a shift fork, a shift rod fixed to the shift fork, and a shift arm fixed to the shift rod. The shift fork, the shift rod, and the shift arm integrally move in an axial direction. In this example, the pin portion and the second contact portion may be provided at the shift arm.

In the present teaching and the embodiments, a wide portion is arranged to allow a pin portion to move in the wide portion in an axial direction when a second contact portion moves in the axial direction due to the contact between the second contact portion and a first contact portion which is rotating on account of the rotation of a shift drum in a first direction. Because the shift drum is rotating in the first direction, the pin portion moves in the circumferential direction opposite to the first direction and in the axial direction, relative to the wide portion.

In the present teaching and the embodiments, a transmission is arranged to move a shift member in an axial direction from the position to which the shift member has been guided due to the contact between a guide groove and a pin portion, because a second contact portion moves in the axial direction due to the contact between the first contact portion and the second contact portion when a shift drum rotates in a first direction. In this recitation, the position to which the shift member has been guided due to the contact between the guide groove and the pin portion is a position where the shift member has been moved in the axial direction due to the contact between the guide groove and the pin portion when the shift drum rotates in the first direction. In the present teaching and the embodiments, when an axial direction in which a slider provided on a power transmission shaft moves toward a shift gear provided on the power transmission shaft is defined as a connecting direction, an axial direction in which a second contact portion moves due to the contact between a first contact portion and the second contact portion when a shift drum rotates in a first direction may be the connecting direction.

In the present teaching and the embodiments, a first contact portion may have a cam surface that is formed to convert the rotational force of a shift drum into a force in an axial direction. In this case, a shift member moves in the axial direction from the position to which the shift member has been guided due to the contact between a guide groove and a pin portion, because a second contact portion moves in the axial direction due to the contact between the cam surface of the rotating first contact portion and the second contact portion when the shift drum rotates in a first direction. The cam surface of the first contact portion may be a slope surface tilted in the axial direction relative to the circumferential direction centered on the rotational central axis of the shift drum.

In the present teaching and the embodiments, a second contact portion may have a cam surface that is formed to convert the rotational force of a shift drum into a force in an axial direction. In this case, a shift member moves in the axial direction from the position to which the shift member has been guided due to the contact between a guide groove and a pin portion, because a second contact portion moves in the axial direction due to the contact between the rotating first contact portion and the cam surface of the second contact portion when the shift drum rotates in a first direction. The cam surface of the second contact portion may be a slope surface tilted in the axial direction relative to the circumferential direction centered on the rotational central axis of the shift drum.

In the present teaching and the embodiments, a first contact portion and a second contact portion which are arranged such that shift up from an (n-1)-th speed stage to an n-th speed stage occurs without movement in an axial direction of the second contact portion due to the contact between the first contact portion and the second contact portion do not indicate a first contact portion and a second contact portion which restrict the movement in the axial direction of the second contact portion when shifting up from the (n-1)-th speed stage to the n-th speed stage. In the present teaching and the embodiments, an expression "without movement in an axial direction of a second contact portion does due to contact between a first contact portion and the second contact portion" indicates either the second contact portion does not move in the axial direction due to the contact between the first contact portion and the second contact portion even though the first contact portion and the second contact portion make contact with each other, or the contact between the first contact portion and the second contact portion does not occur. Cases where the second contact portion does not move in the axial direction due to the contact between the first contact portion and the second contact portion even though the first contact portion and the second contact portion make contact with each other, encompass a case where the shift member does not move in the axial direction when the first contact portion and the second contact portion make contact with each other and a case where, when the first contact portion and the second contact portion make contact with each other, the shift member moves in the axial direction for a reason different from the contact between the first contact portion and the second contact portion.

In the present teaching and the embodiments, an expression "when shifting up from an (n-1)-th speed stage to an n-th speed stage, a second contact portion moves in an axial direction due to the contact between a first contact portion and the second contact portion, by a distance shorter than the distance of movement in the axial direction of the second contact portion due to the contact between the first contact portion and the second contact portion when shifting down from an (n+1)-th speed stage to the n-th speed stage" indicates that the accumulative distance of movement in the axial direction of a shift member due to the movement in the axial direction of the second contact portion on account of the contact between the first contact portion and the second contact portion when shifting up from the (n-1)-th speed stage to the n-th speed stage is shorter than the accumulative distance of movement in the axial direction of the shift member due to the movement in the axial direction of the second contact portion on account of the contact between the first contact portion and the second contact portion when shifting down from the (n+1)-th speed stage to the n-th speed stage.

In the present teaching and the embodiments, the transmission may include shift members including a shift member including a second contact portion. Each of the shift members moves in an axial direction integrally with each of sliders included in the transmission. At least one shift member among the shift members includes a second contact portion. At least one shift member among the two shift members may include a second contact portion. The shift members may include a shift member not including a second contact portion. When the transmission includes plural shift members, a shift drum has plural guide grooves. When at least two shift members among the shift members include second contact portions, the shift drum includes at least one first contact portion. The number of first contact portions may be identical with the number of second contact portions. The number of the first contact portions may be identical with, larger than, or smaller than the number of the second contact portions. When the number of the first contact portions is larger than the number of the second contact portions, one second contact portion makes contact with plural first contact portions at different timings. In this case, the second contact portion may have plural cam surfaces. When the number of the first contact portions is smaller than the number of the second contact portions, one first contact portion makes contact with plural second contact portions at different timings.

In the present teaching and the embodiments, the transmission is a multistage transmission. In the present teaching and the embodiments, the transmission is a non-synchronous transmission. In the present teaching and the embodiments, the transmission is a constant-mesh transmission. In the present teaching and the embodiments, the transmission may be an AMT (Automated Manual installation) or an MT (Manual Transmission). The AMT is also known as a semi-automatic transmission.

In the present teaching and the embodiments, the transmission is mounted on a vehicle, for example. The vehicle on which the transmission is mounted may be a straddled vehicle or an automobile. The straddled vehicle includes a motorcycle, a motor tricycle, a four-wheeled buggy (ATV: All Terrain Vehicle), a snowmobile, and a personal watercraft, for example. The motorcycle includes a scooter, an engine-equipped bicycle, a moped, etc. In the present teaching and the embodiments, for example, the transmission may be mounted on an apparatus such as an agricultural machine, which is not a vehicle. In the present teaching and the embodiments, a driving source configured to generate power transmitted to the transmission may be an engine, an electric motor, or both of the engine and the electric motor.

In the present teaching and the embodiments, at least one of plural options encompasses all conceivable combinations of the options. At least one of plural options may be one of the options, some of the options, or all of the options. For example, at least one of A, B, or C indicates only A, only B, only C, A and B, A and C, B and C, or A, B, and C.

In the present teaching and the embodiments, A and/or B means A and B, or A or B.

In the claims, when the number of a constituent feature is not clearly specified and the constituent feature is expressed in a singular form in English, the number of the constituent feature may be more than one in the present teaching. In the present teaching, the number of the constituent features may be only one.

In the present teaching and the embodiments, terms "including", "comprising", "having", and derivatives thereof are used to encompass not only listed items and equivalents thereof but also additional items. In the present teaching and the embodiments, the terms "mounted", "connected", "coupled", and "supported" are used in broad sense. Specifically, not only direct attachment, connection, coupling, and support but also indirect attachment, connection, coupling, and support are included. Further, connected and coupled are not limited to physical or mechanical connections and couplings. They also include direct or indirect electrical connections and couplings.

Unless otherwise defined, all terms (technical and scientific terms) used in this specification and claims indicate meanings typically understood by a person with ordinary skill in the art in the technical field to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

In this specification, the term "may" is non-exclusive. The term "may" indicates "may but not must". In the present specification, "may" implicitly encompasses "do not". In this specification, an arrangement which is explained by using the term "may" exerts at least the above-described effects of the arrangement of claim 1.

Before the embodiments of the present teaching are detailed, it is informed that the present teaching is not limited to the configurations and layout of elements described below and/or shown in drawings. The present teaching is also applicable to embodiments other than the embodiments described later. The present teaching may be implemented as various modifications of the below-described embodiment.

### [Advantageous Effects]

A transmission of the present teaching includes a shift drum for moving a shift member, and is capable of moving the shift member in the axial direction without having an auxiliary cam in a guide groove as in Patent Literature 1, and is capable of improving the durability of the transmission suppressing the upsizing of the transmission.

### [Brief Description of Drawings]

FIG. 1 is a schematic diagram illustrating a structure of a transmission of a First Embodiment of the present teaching.
FIG. 2 is a developed view of an outer circumferential portion of a shift drum of a transmission of each of a Second Embodiment and a Third Embodiment of the present teaching.
FIG. 3 is a cross section of a part of a transmission of a Fourth Embodiment of the present teaching.
FIG. 4 includes developed sectional views of a shift gear and a slide gear of the transmission of the Fourth Embodiment.
FIG. 5 is a schematic diagram of a shift mechanism of the transmission of the Fourth Embodiment.
FIG. 6 is a developed view of an outer circumferential portion of a shift drum of the Fourth Embodiment.
FIG. 7 illustrates an auxiliary guide portion of a shift member of the Fourth Embodiment.
FIG. 8 outlines movement of the shift member of the Fourth Embodiment, when drive shift up is performed.
FIG. 9 outlines movement of the shift member of the Fourth Embodiment, when coast shift down is performed.
FIG. 10 outlines movement of the shift member of the Fourth Embodiment, when drive shift down is performed.
FIG. 11 shows a shift member of a Fifth Embodiment.

### [Description of Embodiments]

### <First Embodiment>

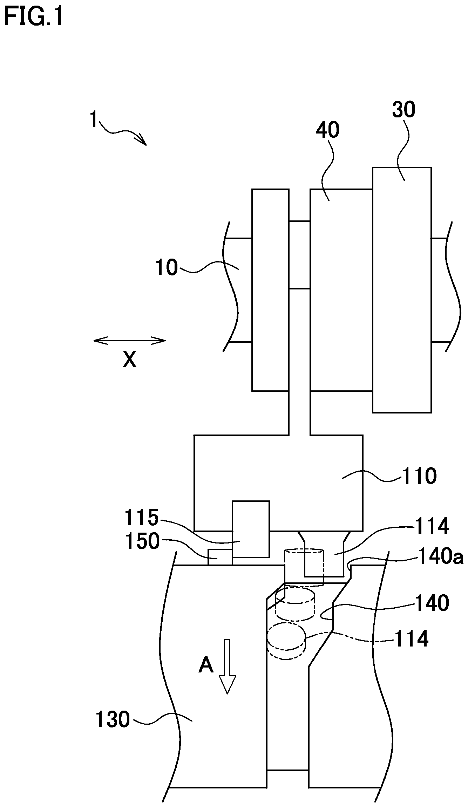

Hereinafter, the First Embodiment of the present teaching will be described with reference to FIG. 1. FIG. 1 is a schematic diagram illustrating an example of a transmission 1 of the First Embodiment. FIG. 1 includes a developed view of part of an outer circumferential portion of a shift drum 130. The transmission 1 of the First Embodiment includes a power transmission shaft 10 on which a shift gear 30 is provided, a slider 40, a shift member 110, and a shift drum 130. The slider 40 is provided on the power transmission shaft 10 to be movable in the axial direction. In FIG. 1, an arrow X indicates the axial direction of each of the input shaft 11 and the output shaft 12. In the descriptions below, an axial direction indicates the axial direction of each of the input shaft 11 and the output shaft 12. The slider 40 is driven in the axial direction in order to change the speed stage. The shift member 110 is arranged to move together with the slider 40 in the axial direction. The shift member 110 includes a pin portion 114. While the shift member 110 shown in FIG. 1 is constituted solely by a shift fork, the shift member 110 of the First Embodiment is not limited to this arrangement. The shift drum 130 includes an outer circumferential portion in which a guide groove 140 is formed. In the guide groove 140, the pin portion 114 of the shift member 110 is provided. The shift drum 130 is arranged to move the shift member 110 in the axial direction in accordance with the position of the guide groove 140 with which the pin portion 114 makes contact, when the shift drum 130 rotates about a rotational central axis that is in parallel to the axial direction.

The shift drum 130 includes a first contact portion 150. The first contact portion 150 is provided at the outer circumferential portion of the shift drum 130 to be remote from the guide groove 140. The first contact portion 150 is arranged to rotate integrally with the shift drum 130. The shift member 110 includes a second contact portion 115. The second contact portion 115 is provided to be remote from the pin portion 114. The second contact portion 115 is arranged to move in the axial direction integrally with the shift member 110. The second contact portion 115 is arranged to move in the axial direction upon making contact with the rotating first contact portion 150, when the shift drum 130 rotates in a direction A. The direction A is equivalent to a first direction of the present teaching. The guide groove 140 has a wide portion 140a. The wide portion 140a is arranged to have a groove width in the axial direction which is wider than the width in the axial direction of the pin portion 114, in order to allow the pin portion 114 to move in the guide groove 140 in the axial direction when the second contact portion 115 moves in the axial direction due to the contact between the second contact portion 115 and the first contact portion 150 which is rotating on account of the rotation of the shift drum 130 in the direction A. The transmission 1 is arranged to move the shift member 110 in the axial direction from the position to which the shift member 110 has been guided due to the contact between the guide groove 140 and the pin portion 114, because the second contact portion 115 moves in the axial direction due to the contact between the first contact portion 150 and the second contact portion 115 when the shift drum 130 rotates in the direction A. Two-dot chain lines in FIG. 1 show a change of the position relative to the guide groove 140 of the pin portion 114 that moves in the axial direction due to the contact with the guide groove 140 before the second contact portion 115 moves in the axial direction due to the contact between the first contact portion 150 and the second contact portion 115. Because the transmission 1 of the First Embodiment is arranged as described above, the durability of the transmission 1 can be improved while upsizing of the transmission 1 is suppressed, even though the shift member 110 is movable in the axial direction by a structure different from the structure of Patent Literature 1 in which the auxiliary cam is provided in the guide groove. The first contact portion 150 and the second contact portion 115 of the First Embodiment may not be structured as shown in FIG. 1. In the First Embodiment, the direction A may be the rotational direction of the shift drum 130 when shifting down.

### <Second Embodiment and Third Embodiment>

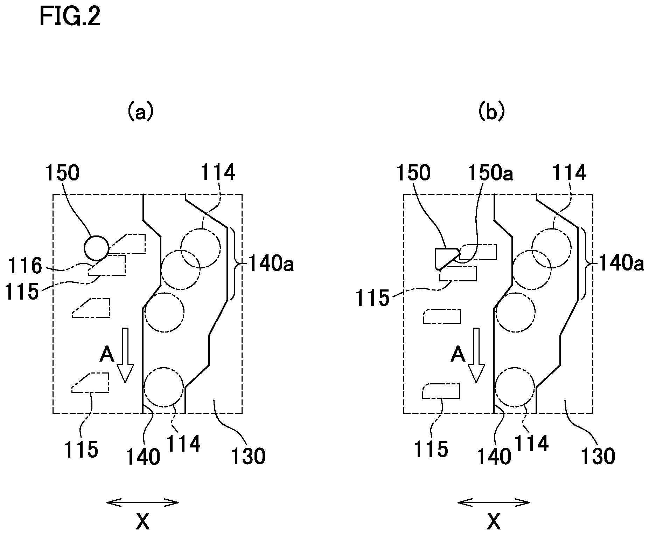

The following will describe the Second Embodiment of the present teaching with reference to FIG. 2(a) and FIG. 2(b). The transmission 1 of each of the Second Embodiment and the Third Embodiment has all features of the transmission 1 of the First Embodiment. FIG. 2(a) is a developed view of an outer circumferential portion of a shift drum 130 of the transmission 1 of an example of the Second Embodiment. FIG. 2(b) is a developed view of an outer circumferential portion of a shift drum 130 of the transmission 1 of an example of the Third Embodiment. In FIG. 2(a) and FIG. 2(b), two-dot chain lines indicate changes in the relative positions of at least part of the second contact portion 115 of the shift member 110 and the pin portion 114 with respect to the guide groove 140, when the shift drum 130 rotates in the direction A.

The second contact portion 115 of the Second Embodiment has a cam surface 116 that is formed to convert the rotational force of the shift drum 130 into a force in the axial direction. The cam surface 116 of the Second Embodiment may be a slope surface tilted in the axial direction relative to a circumferential direction centered on the rotational central axis of the shift drum 130, in such a manner as a cam surface 116 shown in FIG. 2(a). The transmission 1 of the Second Embodiment is arranged to move the shift member 110 in the axial direction from the position to which the shift member 110 has been guided due to the contact between the guide groove 140 and the pin portion 114, because the second contact portion 115 moves in the axial direction due to the contact between the cam surface 116 of the second contact portion 115 and the rotating first contact portion 150 when the shift drum 130 rotates in the direction A. The first contact portion 150 and the second contact portion 115 of the Second Embodiment may not be structured as shown in FIG. 2(a).

A first contact portion 150 of the Third Embodiment has a cam surface 150a that is formed to convert the rotational force of the shift drum 130 into a force in the axial direction. The cam surface 150a of the Third Embodiment may be a slope surface tilted in the axial direction relative to the circumferential direction centered on the rotational central axis of the shift drum 130, in such a manner as a cam surface 150a shown in FIG. 2(b). The transmission 1 of the Third Embodiment is arranged to move the shift member 110 in the axial direction from the position to which the shift member 110 has been guided due to the contact between the guide groove 140 and the pin portion 114, because the second contact portion 115 moves in the axial direction due to the contact between the cam surface 150a of the rotating first contact portion 150 and the second contact portion 115 when the shift drum 130 rotates in the direction A. The first contact portion 150 and the second contact portion 115 of the Third Embodiment may not be structured as shown in FIG. 2(b).

In the Second Embodiment and the Third Embodiment, the second contact portion 115 may be arranged to move in the axial direction due to the contact with the rotating first contact portion 150, when shift down from an (n+1)-th speed stage to an n-th speed stage occurs by the rotation of the shift drum 130 in the direction A. In this regard, n is a natural number equal to or more than 1. When the second contact portion 115 is arranged in this manner, the first contact portion 150 and the second contact portion 115 may be arranged so that, by the rotation of the shift drum 130 in a direction opposite to the direction A, shift up from an (n-1)-th speed stage to the n-th speed stage occur without the movement in the axial direction of the second contact portion 115 due to the contact between the first contact portion 150 and the second contact portion 115. Alternatively, when the second contact portion 115 is arranged in the manner described above, the first contact portion 150 and the second contact portion 115 may be arranged so that, when shift up from the (n-1)-th speed stage to the n-th speed stage occurs by the rotation of the shift drum 130 in a direction opposite to the direction A, the second contact portion 115 moves in the axial direction due to the contact between the first contact portion 150 and the second contact portion 115 by a distance shorter than the distance of the movement in the axial direction of the second contact portion 115 due to the contact between the first contact portion 150 and the second contact portion 115 in shift down from the (n+1)-th speed stage to the n-th speed stage. In this case, n is a natural number equal to or more than 2.

### <Fourth Embodiment>

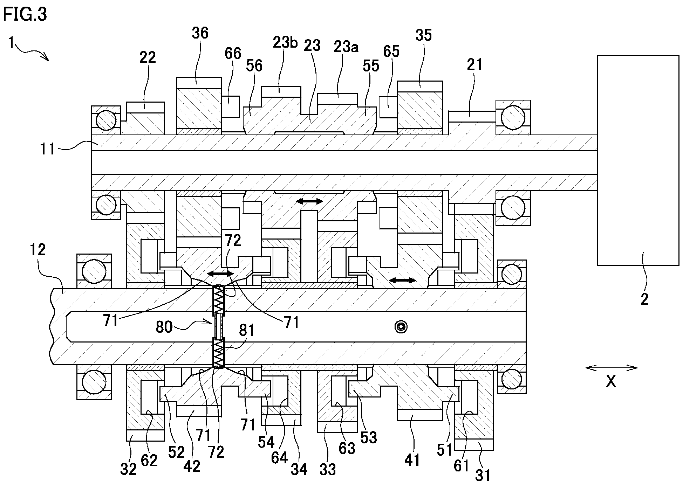

Hereinafter, the Fourth Embodiment of the present teaching will be described with reference to FIG. 3 to FIG. 10. A transmission 1 of the Fourth Embodiment has the features of the transmission 1 of the First Embodiment and the features of the transmission 1 of the Second Embodiment. The transmission 1 is mounted on a vehicle such as a motorcycle. The vehicle includes an engine (not illustrated), the transmission 1, a clutch 2, and a controller (not illustrated). The driving force generated by the engine is transmitted to a wheel through the clutch 2 and the transmission 1. The controller controls the engine, the transmission 1, and the clutch 2.

The transmission 1 includes an input shaft 11 and an output shaft 12. The input shaft 11 and the output shaft 12 are specific examples of the power transmission shaft 10 of the First Embodiment. The transmission 1 is configured to be able to transmit power of the input shaft 11 to the output shaft 12. The ratio of the rotational speed of the input shaft 11 to the rotation speed of the output shaft 12 is termed a transmission ratio. A change of the transmission ratio to increase the transmission ratio is referred to as shift down. The transmission 1 has plural speed stages (gear positions) that are different in transmission ratio. The speed stage of the transmission 1 is changed by the controller. The vehicle may include a shift operator (not illustrated) that is operated by the driver to change the speed stage of the transmission 1. The controller changes the speed stage of the transmission 1 in accordance with an operation of the shift operator. The controller may be arranged to be able to automatically change the speed stage of the transmission 1 in accordance with, for example, the vehicle speed, when the shift operator is not operated. The vehicle may not include a shift operator that is operated by the driver to change the speed stage of the transmission 1.

The input shaft 11 is connected to a crankshaft (not illustrated) of the engine through the clutch 2. The clutch 2 is a friction clutch, for example, but is not limited to this. However, the clutch 2 is not a dual clutch. In other words, the transmission 1 is not a dual clutch transmission. The transmission 1 is an AMT (Automated Manual Transmission). In other words, the controller is arranged to be able to automatically change the power transmission ratio of the clutch 2 without requiring an operation by the driver. The controller may control at least one of the clutch 2 or the engine (driving source) when changing the speed stage of the transmission 1.

The transmission 1 is a six-speed transmission. On the input shaft 11, a gear 21, a fifth speed gear 35, a slide gear 23, a sixth speed gear 36, and a gear 22 are provided in this order from right to left in FIG. 3. On the output shaft 12, a first speed gear 31, a slide gear 41, a third speed gear 33, a fourth speed gear 34, a slide gear 42, and a second speed gear 32 are provided in this order from right to left in FIG. 3. The first speed gear 31, the second speed gear 32, the third speed gear 33, the fourth speed gear 34, the fifth speed gear 35, and the sixth speed gear 36 may be collectively termed shift gears 31 to 36. The shift gears 31 to 34 are supported by the output shaft 12 to be rotatable relative to the output shaft 12 and to be immovable in the axial direction. The shift gears 35 and 36 are supported by the input shaft 11 to be rotatable relative to the input shaft 11 and to be immovable in the axial direction. The slide gear 23 includes a gear 23a and a gear 23b. The slide gear 23 is supported by the input shaft 11 to be rotatable together with the input shaft 11 and to be movable in the axial direction. The slide gear 41 and the slide gear 42 are supported by the output shaft 12 to be rotatable together with the output shaft 12 and to be movable in the axial direction. The gear 21 is integrally molded with the input shaft 11. The gear 22 is supported by the input shaft 11 to be rotatable together with the input shaft 11 and to be immovable in the axial direction. The six gears 21, 35, 23a, 23b, 36, and 22 of the input shaft 11 always mesh with the six gears 31, 41, 33, 34, 42, and 32 of the output shaft 12, respectively.

The slide gear 41 has dogs 51 that are provided at an end portion opposing the first speed gear 31 in the axial direction. The first speed gear 31 has dogs 61 that are able to mesh with the dogs 51 of the slide gear 41. The slide gear 41 has dogs 53 that are provided at an end portion opposing the third speed gear 33 in the axial direction. The third speed gear 33 has dogs 63 that are able to mesh with the dogs 53 of the slide gear 41. The slide gear 42 has dogs 52 that are provided at an end portion opposing the second speed gear 32 in the axial direction. The second speed gear 32 has dogs 62 that are able to mesh with the dogs 52 of the slide gear 42. The slide gear 42 has dogs 54 that are provided at an end portion opposing the fourth speed gear 34 in the axial direction. The fourth speed gear 34 has dogs 64 that are able to mesh with the dogs 54 of the slide gear 42. The slide gear 23 has dogs 55 that are provided at an end portion opposing the fifth speed gear 35 in the axial direction. The fifth speed gear 35 has dogs 65 that are able to mesh with the dogs 55 of the slide gear 23. The slide gear 23 has dogs 56 that are provided at an end portion opposing the sixth speed gear 36 in the axial direction. The sixth speed gear 36 has dogs 66 that are able to mesh with the dogs 56 of the slide gear 23.

As the slide gears (sliders) 23, 41, and 42 are moved in the axial direction from the position shown in FIG. 3, each of the slide gears 23, 41, and 42 can mesh with one of the shift gears 31 to 36 adjacent to the each slide gear in the axial direction, by means of the dogs. When one of the shift gears 31 to 36 meshes with a slide gear adjacent to the one shift gear in the axial direction by means of the dogs, power is transmitted from the input shaft 11 to the output shaft 12 through that shift gear and that slide gear. For example, when the first speed gear 31 meshes with the slide gear 41, the power from the input shaft 11 is transmitted to the gear 21, the first speed gear 31, the slide gear 41, and then the output shaft 12 in order. The speed stage of the transmission 1 in this case is the first speed stage. For example, when the third speed gear 33 meshes with the slide gear 41, the power from the input shaft 11 is transmitted to the slide gear 23, the third speed gear 33, the slide gear 41, and then the output shaft 12 in order. The speed stage of the transmission 1 in this case is the third speed stage. For example, when the fifth speed gear 35 meshes with the slide gear 23, the power from the input shaft 11 is transmitted to the slide gear 23, the fifth speed gear 35, the slide gear 41, and then the output shaft 12 in order. The speed stage of the transmission 1 in this case is the fifth speed stage. When none of the shift gears meshes with a slide gear adjacent to each shift gear in the axial direction, the transmission 1 is in a neutral state. As the movement of the slide gears 23, 41, and 42 in the axial direction is controlled, the speed stage of the transmission 1 is controlled. In other words, the slide gears 23, 41, and 42 are driven in the axial direction in order to change the speed stage.

The dogs 51 are aligned in the circumferential direction. The dogs 52 to 56 and 61 to 66 are also aligned in the circumferential direction. The dogs 51 to 56 of the slide gears 41, 42, and 23 are dog teeth. In other words, the dogs 51 to 56 are formed to protrude in the axial direction. The dogs 61 to 64 of the shift gears 31 to 34 are dog holes. The dogs 61 to 64 are concave in shape. In other words, the dogs 61 to 64 are dog holes that do not penetrate the shift gears 31 to 34 in the axial direction. The dogs 61 to 64 may be dog holes penetrating the shift gears 31 to 36 in the axial direction. The dogs 61 to 64 may be dog teeth. In this case, the dogs 51 to 54 may be dog teeth or dog holes. The dogs 65 and 66 of the shift gears 35 and 36 are dog teeth. The dogs 65 and 66 may be dog holes.

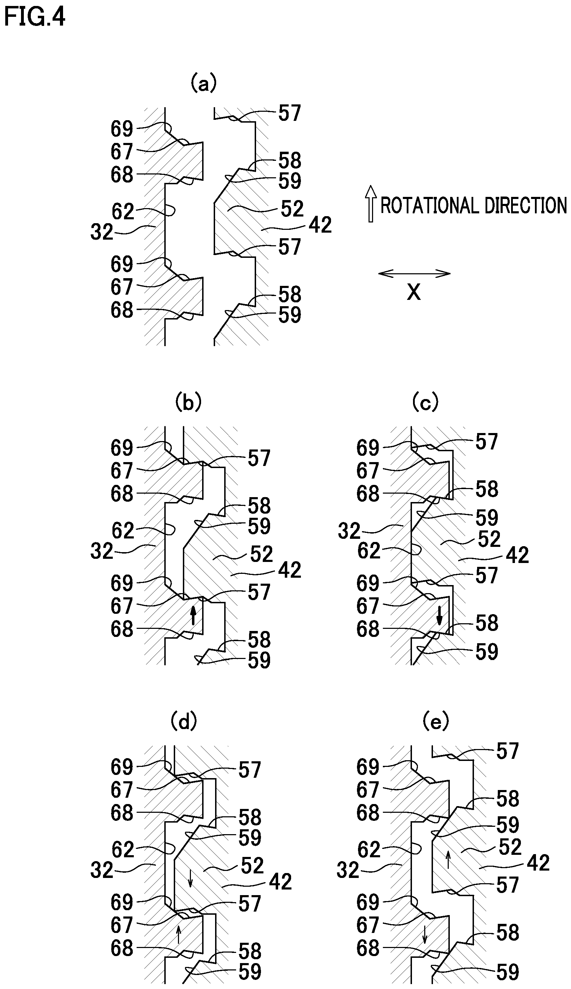

The following will describe common characteristics of the dogs (dog holes) 61 to 64 of the shift gears 31 to 34 and common characteristics of the dogs (dog teeth) 51 to 54 of the slide gears 41 and 42, by taking the dog 62 of the second speed gear 32 and the dog 52 of the slide gear 42 as an example. FIG. 4(a) to FIG. 4(e) are developed sectional views of the second speed gear 32 and the slide gear 42. The up-down direction in each of FIG. 4(a) to FIG. 4(e) indicates the circumferential direction about the rotational central axis of the output shaft 12. The rotational direction of each of the shift gear 32 and the slide gear 42 is an upward direction in FIG. 4(a) to FIG. 4(e). FIG. 4(a) shows a state in which the transmission 1 is at a speed stage different from the second speed stage or at the neutral position. The arrows in FIG. 4(b) and FIG. 4(c) show the direction of the torque generated in the shift gear 32. The arrows in FIG. 4(d) and FIG. 4(e) show the rotational direction of the slide gear 42 relative to the shift gear 32 and the rotational direction of the shift gear 32 relative to the slide gear 42.

The dog (dog tooth) 52 has a drive meshing surface 57, a coast meshing surface 58, and a release guide surface 59. In the axial direction, the drive meshing surface 57 is close to the tip of the teeth as compared to the coast meshing surface 58. The drive meshing surface 57 is tilted in the circumferential direction relative to the axial direction. The drive meshing surface 57 is tilted so that one end of the surface close to the bottom of the teeth is on the downstream in the rotational direction of the shift gear 32 and the slide gear 42 as compared to the other end of the surface far from the bottom of the teeth. The drive meshing surface 57 may be formed to extend along the axial direction. The coast meshing surface 58 is tilted in the circumferential direction relative to the axial direction. The coast meshing surface 58 is tilted so that one end of the surface close to the tip of the teeth is on the downstream in the rotational direction of the shift gear 32 and the slide gear 42 as compared to the other end of the surface far from the tip of the teeth. The coast meshing surface 58 may be formed to extend along the axial direction. The release guide surface 59 is aligned with the drive meshing surface 57 in the circumferential direction. The release guide surface 59 is tilted in the axial direction relative to the circumferential direction. The release guide surface 59 may be spiral in shape relative to the rotational central axis of the output shaft 12, or may extend along the radial direction.

The dog (dog hole) 62 has a drive meshing surface 67, a coast meshing surface 68, and a movement guiding surface 69. The tilt angle and the tilting direction of the drive meshing surface 67 relative to the axial direction are identical with those of the drive meshing surface 57 of the dog 52. The tilt angle and the tilting direction of the coast meshing surface 68 relative to the axial direction are identical with those of the coast meshing surface 58 of the dog 52. The movement guiding surface 69 is tilted in the axial direction relative to the circumferential direction. The movement guiding surface 69 may be spiral in shape relative to the rotational central axis of the output shaft 12, or may extend along the radial direction.

FIG. 4(b) shows a state in which the drive meshing surface 57 is in contact with the drive meshing surface 67 and the dog 52 is meshed with the dog 62. This meshed state will be referred to as a drive meshed state. The position in the axial direction of the slide gear 42 when the slide gear 42 and the shift gear 32 are in the drive meshed state will be referred to as the drive meshed position of the slide gear 42 relative to the shift gear 32. It is noted that the term "drive meshed position" is used no matter whether the drive meshed state is established. When the transmission 1 transmits a drive torque with the second speed stage, the shift gear 32 and the slide gear 42 are in the drive meshed state. The drive torque is a torque transmitted from an engine to a wheel when the engine drives the wheel.

FIG. 4(c) shows a state in which the coast meshing surface 58 is in contact with the coast meshing surface 68 and the dog 52 meshes with the dog 62. This meshed state will be referred to as a coast meshed state. In the coast meshed state, the dogs 52 and 62 deeply mesh with each other as compared to the drive meshed state. The position in the axial direction of the slide gear 42 when the slide gear 42 and the shift gear 32 are in the coast meshed state will be referred to as the coast meshed position of the slide gear 42 relative to the shift gear 32. It is noted that the term "coast meshed position" is used no matter whether the coast meshed state is established. When the transmission 1 transmits a coast torque with the second speed stage, the shift gear 32 and the slide gear 42 are in the coast meshed state. The coast torque is a torque generated by the rotational inertia of the wheel and is exerted in the direction opposite to the drive torque. The coast torque is a torque transmitted between the engine and the wheel. The coast torque is generated when, for example, engine braking is performed.

FIG. 4(d) shows a state in which an edge of the dog (dog tooth) 52 is in contact with the movement guiding surface 69. As shown in FIG. 4(d), when the edge of the dog 52 makes contact with the movement guiding surface 69 while the slide gear 42 rotates at a lower speed than the shift gear 32, the slide gear 42 receives a force acting away from the shift gear 32. When the transmission 1 is at the second speed stage and the torque transmitted to the transmission 1 is switched from the coast torque to the drive torque, the slide gear 42 rotates at a lower speed than the shift gear 32. Due to this, the meshing between the coast meshing surfaces 58 and 68 of the slide gear 42 and the shift gear 32 is canceled, and the dog 52 of the slide gear 42 makes contact with the movement guiding surface 69 of the shift gear 32. The dog 52 moves along the movement guiding surface 69, and the slide gear 42 and the shift gear 32 become in the drive meshed state. When the transmission 1 is at the second speed stage and the torque transmitted to the transmission 1 is switched from the drive torque to the coast torque, the slide gear 42 rotates at a speed higher than the shift gear 32. As a result, the meshing between the drive meshing surfaces 57 and 67 of the slide gear 42 and the shift gear 32 is canceled. On account of the elastic force exerted by the slide gear biasing spring 81 of a later-described slide gear pressing member 80 in contact with a later-described cam surface 71, the slide gear 42 moves in a direction in which the slide gear 42 further deeply meshes, with the result that the slide gear 42 and the shift gear 32 become in the coast meshed state.

FIG. 4(e) shows a state in which the edge of the dog (dog hole) 62 is in contact with the release guide surface 59. As shown in FIG. 4(e), when the edge of the dog 62 makes contact with the release guide surface 59 while the slide gear 42 rotates at a higher speed than the shift gear 32, the slide gear 42 receives a force acting away from the shift gear 32. To put it differently, when the dog 62 makes contact with the release guide surface 59, the force by which the meshing between the dogs 52 and 62 of the shift gear 32 and the slide gear 42 is canceled is generated in the slide gear 42. As detailed later, the release guide surface 59 is used when the speed is changed.

The dogs (dog holes) 61 to 64 may be different from one another in shape, as long as they share the above-described common characteristics. At least two of or all of the dogs 61 to 64 may be symmetrical in shape. The dogs (dog teeth) 51 to 54 may be different from one another in shape. At least two of or all of the dogs 51 to 54 may be symmetrical in shape. The dogs (dog teeth) 51 to 54 are different from the dogs (dog teeth) 55 and 56 in shape. The dogs (dog teeth) 55 and 56 may be different in shape, identical in shape, or symmetrical in shape. The dogs (dog teeth) 65 and 66 may be different in shape, identical in shape, or symmetrical in shape. The dogs (dog teeth) 65 and 66 may be different from the dogs (dog teeth) 55 and 56 in shape, identical in shape, or symmetrical in shape.

Each of the dogs 51 to 54 of the slide gears 41 and 42 has the release guide surface 59, whereas each of the dogs 61 to 64 of the shift gears 31 to 34 has the movement guiding surface 69. Each of the dogs of the slide gears 41 and 42 may have both the movement guiding surface and the release guide surface as in the dog of the slider of Patent Literature 1. The dog 54 of the slide gear 42 may not have the release guide surface 59. Each of the dogs 64 of the fourth speed gear 34 and the dogs 54 of the slide gear 42 may not have the movement guiding surface. The shape of each of the dogs 64 of the fourth speed gear 34 and the dogs 54 of the slide gear 42 may be identical with the shape of each of the dogs 65 and 66 of the shift gears 35 and 36 and the dogs 55 and 56 of the slide gear 23.

The transmission 1 is arranged so that, when shifting up, the transmission 1 is temporarily in a double-meshed state where the two slide gears 41 and 42 simultaneously mesh with two of the shift gears 31 to 34 through dogs. For example, when shifting up from the first speed stage to the second speed stage, the transmission 1 is temporarily in the double-meshed state where the two slide gears 41 and 42 are simultaneously meshed with the shift gears 31 and 32 through the dogs 51, 52, 61, and 62. When the slide gear 42 meshes with the second speed gear 32 through the dogs 52 and 62, the slide gear 41 rotates at a higher speed than the first speed gear 31. The transmission 1 is arranged so that the movement of the slide gear 41 in the axial direction toward the first speed gear 31 is restricted in this case. As a result, the release guide surface 59 of the dog 51 of the slide gear 41 makes contact with the dog 61 of the first speed gear 31 and hence the slide gear 41 moves away from the first speed gear 31 in the axial direction. Due to this, the meshing between the dog 51 of the slide gear 41 and the dog 61 of the first speed gear 31 is canceled. On this account, being different from the controller of the known transmission, the controller is not required to control the clutch 2 and the engine in order to reduce the pressing force generated in accordance with the power transmission between the dog 51 of the slide gear 41 and the dog 61 of the first speed gear 31. As such, the transmission 1 is arranged so that a force of canceling the meshing of the dogs is generated in one of the two slide gears 41 and 42, when the double-meshed state is established. The transmission 1 is therefore able to seamlessly perform shift up to the second speed stage without blocking the power transmission. Likewise, the transmission 1 is able to seamlessly perform shift up to the third speed stage and the fourth speed stage without blocking the power transmission. The transmission 1 is arranged so that the double-meshed state is not established when shifting down.

The following will describe the common characteristics of the slide gears 41 and 42 apart from the dogs, by taking the slide gear 42 as an example. The slide gears 41 and 42 may be different from one another in shape, as long as they share the below-described common characteristics. The slide gears 41 and 42 may be symmetrical in shape.

The slide gear 42 is spline-fitted with the output shaft 12. As shown in FIG. 3, in the inner circumferential surface of the slide gear 42, four cam surfaces 71 and two checking grooves 72 are formed. Each checking groove 72 is formed between two cam surfaces 71 that are aligned in the axial direction. The checking groove 72 may not be formed. The slide gear 42 makes contact with a slide gear pressing member 80 provided on the output shaft 12. The slide gear pressing member 80 makes contact with the four cam surfaces 71 and the two checking grooves 72. The slide gear pressing member 80 simultaneously makes contact with two cam surfaces 71 aligned in the circumferential direction among the four cam surfaces 71. The number of cam surfaces 71 formed to be aligned in the circumferential direction is not limited to two, and may be three or more. The number of checking grooves 72 formed to be aligned in the circumferential direction is not limited to two, and may be three or more. The checking grooves 72 may be a single groove that is continuous in the circumferential direction. The slide gear pressing member 80 has a slide gear biasing spring 81 which applies an elastic force to the slide gear 42 outward in the radial direction of the output shaft 12.

Each of the two cam surfaces 71 is a slope surface tilted in the radial direction relative to the axial direction. When the slide gear 42 moves in the axial direction, the slide gear pressing member 80 makes contact with the cam surface 71. The cam surface 71 is configured to convert an elastic force exerted in the radial direction from the slide gear pressing member 80 to a force in the axial direction. When the slide gear pressing member 80 makes contact with the cam surface 71, the elastic force of the slide gear biasing spring 81 acts as a force of pressing the slide gear 42 in the axial direction in which the checking groove 72 moves away from the slide gear pressing member 80. The checking groove 72 is formed to allow the slide gear pressing member 80 to be fitted therein. When the transmission 1 is in neither the second speed stage nor the fourth speed stage, the slide gear pressing member 80 is fitted in the checking groove 72 of the slide gear 42.

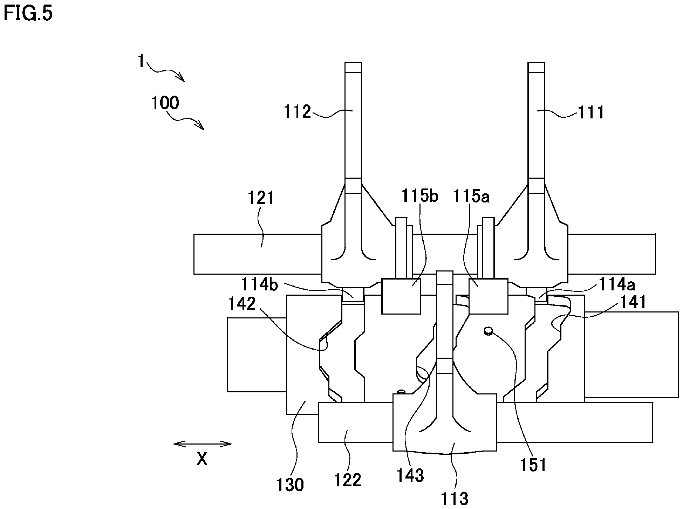

As shown in FIG. 5, the transmission 1 includes a shift mechanism 100 by which the slide gears 41, 42, and 23 is moved in the axial direction. The transmission 1 is a sequential manual transmission. In other words, the transmission 1 is arranged so that, when the speed stage (gear position) is changed, the speed stage is changeable to only a speed stage that is adjacent to the speed stage before the change in terms of the transmission ratio. The shift mechanism 100 includes shift members 111, 112, and 113, shift fork guide shafts 121 and 122, and a shift drum 130. The shift members 111, 112, and 113 of the Fourth Embodiment are constituted by shift forks. The speed stage is changed by the rotation of the shift drum 130. Although not illustrated, the shift mechanism 100 includes members such as a shift actuator used for rotating the shift drum 130. The shift actuator is controlled by a controller. A mechanism for rotating the shift drum 130 by the shift actuator is not particularly limited. The shift mechanism 100 may include a stopper spring (not illustrated) that is used for retaining the rotational angle of the shift drum 130 at a rotational angle corresponding to the speed stage.

The shift members 111, 112, and 113 are connected to the slide gears 41, 42, and 23 to be movable in the axial direction integrally with the respective slide gears 41, 42, and 23. To be more specific, the shift members 111, 112, and 113 are fitted in annular grooves formed in the outer circumferential portions of the slide gears 41, 42, and 23. The shift members 111 and 112 that are shift forks are supported by the shift fork guide shaft 121 to be movable in the axial direction. The shift member 113 that is a shift fork is supported by the shift fork guide shaft 122 to be movable in the axial direction.

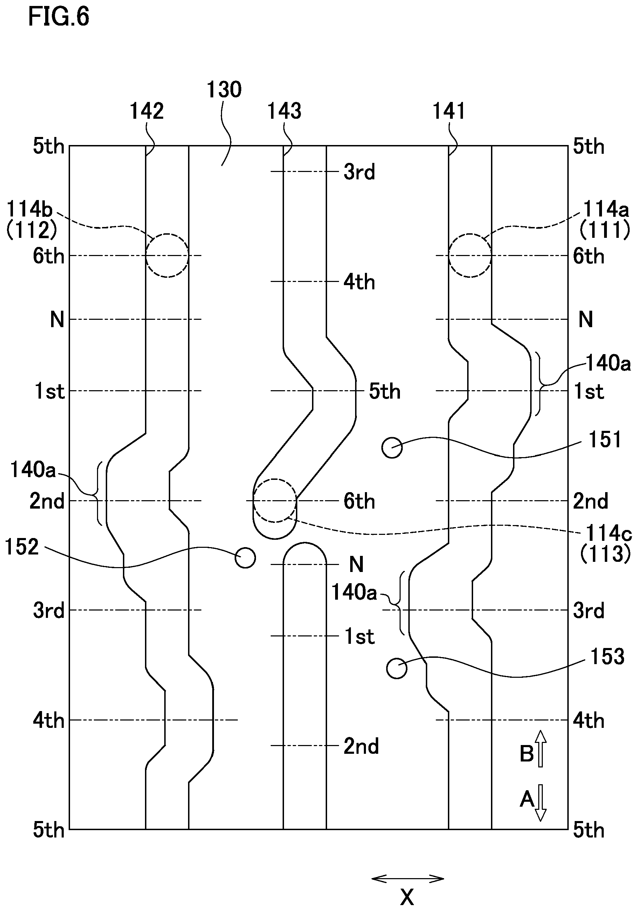

The shift drum 130 moves the shift members 111, 112, and 113 in the axial direction by rotating about a rotational central axis that is in parallel to the axial direction. FIG. 6 is a developed view of the outer circumferential portion of the shift drum 130. The up-down direction in FIG. 6 is equivalent to the circumferential direction of the shift drum 130. When shifting down, the shift drum 130 rotates in the direction A. When shifting up, the shift drum 130 rotates in the direction B.

As shown in FIG. 5 and FIG. 6, the shift drum 130 has three guide grooves 141, 142, and 143 in the outer circumferential portion. The shift members 111, 112, and 113 has pin portions 114a, 114b, and 114c located in the respective guide grooves 141, 142, and 143. The guide grooves 141, 142, and 143 have portions that are tilted in the axial direction relative to the circumferential direction. When the shift drum 130 rotates, the shift members 111, 112, and 113 move in the axial direction in accordance with the positions of the guide grooves 141, 142, and 143 with which the pin portions 114a, 114b, and 114c are in contact. The relationship between the positions of the pin portions 114a, 114b, and 114c in the guide grooves 141, 142, and 143 and the speed stages of the transmission 1 is shown in FIG. 6. The guide groove 141 and the pin portion 114a are provided for the first speed stage and the third speed stage. The guide groove 142 and the pin portion 114b are provided for the second speed stage and the fourth speed stage. The guide groove 143 and the pin portion 114c are provided for the fifth speed stage and the sixth speed stage. The guide groove 141 has two wide portions 140a that are provided for the first speed stage and the third speed stage. The guide groove 142 has one wide portion 140a that is provided for the second speed stage.

The transmission 1 is arranged to differentiate the loci of the pin portions 114a and 114b in the guide grooves 141 and 142 between a case of shift up and a case of shift down. To achieve this arrangement, the shift drum 130 includes three protrusions 151 to 153 (see FIG. 6), and the shift members 111 and 112 has auxiliary guide portions 115a and 115b, respectively (see FIG. 5). The protrusions 151 to 153 are specific examples of the first contact portions 150 of the First Embodiment and the Second Embodiment. The auxiliary guide portion 115a of the shift member 111 and the auxiliary guide portion 115b of the shift member 111 are respectively specific examples of the second contact portions 115 of the shift members 110 of the First Embodiment and the Second Embodiment. The guide grooves 141 and 142 are respectively specific examples of the guide grooves 140 of the First Embodiment and the Second Embodiment. The pin portions 114a and 114b are specific examples of the pin portions 114 of the First Embodiment and the Second Embodiment. The slide gears 41 and 42 connected to the shift members 111 and 112 are specific examples of the slider 40 of the First Embodiment. On the outer circumferential portion of the shift drum 130, the protrusions 151 to 153 are positioned to be remote from the guide grooves 141, 142, and 143. The protrusions 151 to 153 protrude radially outward from the outer circumferential surface of the shift drum 130. The auxiliary guide portions 115a and 115b of the shift members 111 and 112 are positioned to be remote from the pin portions 114a and 114b. The auxiliary guide portion 115a is formed to be symmetrical in shape with respect to a plane orthogonal to the axial direction. The auxiliary guide portion 115b is identical in shape with the auxiliary guide portion 115a. The protrusion 151 is provided for the first speed stage, the protrusion 152 is provided for the second speed stage, and the protrusion 153 is provided for the third speed stage. The auxiliary guide portion 115a is provided for the first speed stage and the third speed stage, and the auxiliary guide portion 115b is provided for the second speed stage.

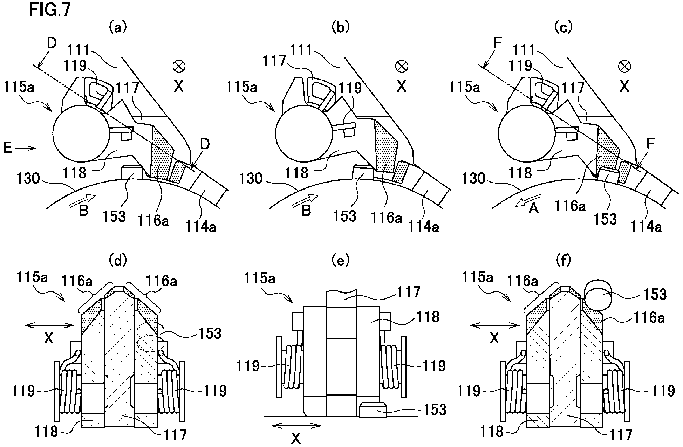

The details of the auxiliary guide portions 115a and 115b will be given with reference to FIG. 7(a) to FIG. 7(f). FIG. 7(a), FIG. 7(b), FIG. 7(d), and FIG. 7(e) show the auxiliary guide portion 115a and the protrusion 153 when the shift drum 130 is rotating in the direction B for shifting up. FIG. 7(b) shows a state in which the shift drum 130 is further rotated in the direction B from a state shown in FIG. 7(a). FIG. 7(d) is a cross section taken along a line D-D in FIG. 7(a). FIG. 7(e) is viewed along an arrow E in FIG. 7(a). FIG. 7(c) and FIG. 7(f) show the auxiliary guide portion 115a and the protrusion 153 when the shift drum 130 is rotating in the direction A for shifting down. FIG. 7(f) is a cross section taken along a line F-F in FIG. 7(c).

Each of the auxiliary guide portions 115a and 115b has a supporting portion 117 and a swinging portion 118. The swinging portion 118 is supported by the supporting portion 117 to be swingable about an axial direction in parallel to the axial direction. When the shift drum 130 rotates in the direction B for shifting up, the swinging portion 118 swings due to the contact with the protrusions 151 to 153. When shifting up from the second speed stage to the third speed stage, the swinging portion 118 of the auxiliary guide portion 115a swings due to the contact with the protrusion 153, as shown in FIG. 7(a) and FIG. 7(b). When shifting up from the neutral position to the first speed stage, the swinging portion 118 of the auxiliary guide portion 115a swings due to the contact with the protrusion 151. When shifting up from the first speed stage to the second speed stage, the swinging portion 118 of the auxiliary guide portion 115a swings due to the contact with the protrusion 152. When shifting up, the movement in the axial direction of the shift member 111 due to the contact between the auxiliary guide portion 115a and the protrusions 151 and 153 does not occur. The movement in the axial direction of the shift member 112 due to the contact between the auxiliary guide portion 115a and the protrusion 152 does not occur. After the swing due to the contact with the protrusions 151 to 153, the swinging portion 118 returns to the position before the swing, on account of the elastic force of a return spring 119 of each of the auxiliary guide portions 115a and 115b.

Each of the auxiliary guide portions 115a and 115b has two cam surfaces 116a that are tilted in the axial direction relative to the circumferential direction centered on the rotational central axis of the shift drum 130. The cam surfaces 116a shown in FIG. 7(a) to FIG. 7(d) and FIG. 7(f) are hatched with dots. Each cam surface 116a is formed across the supporting portion 117 and the swinging portion 118. Most part of the cam surface 116a is formed on the swinging portion 118. The cam surface 116a may be formed solely on the swinging portion 118. The cam surfaces 116a are formed at end portions in the direction B of the auxiliary guide portions 115a and 115b. When shift down occurs by the rotation of the shift drum 130 in the direction A, the protrusions 151 to 153 make contact with the cam surfaces 116a and relatively move along the cam surfaces 116a, with the result that the shift members 111 and 112 move in the axial direction. When shifting down from the fourth speed stage to the third speed stage as shown in FIG. 7(c) and FIG. 7(f), one of the two cam surfaces 116a of the auxiliary guide portion 115a makes contact with the protrusion 153. When shifting down from the second speed stage to the first speed stage, the other one of the two cam surfaces 116a of the auxiliary guide portion 115a makes contact with the protrusion 151. When shifting down from the third speed stage to the second speed stage, one of the two cam surfaces 116a of the auxiliary guide portion 115b makes contact with the protrusion 152. When shifting down from the fourth speed stage to the third speed stage or when shifting down from the second speed stage to the first speed stage, because the protrusion 153 or 151 rotating in the direction A makes contact with the cam surface 116a and the auxiliary guide portion 115a moves in the axial direction, the shift member 111 moves in the axial direction from the position to which the shift member 111 has been guided due to the contact between the guide groove 141 and the pin portion 114a. When shifting down from the third speed stage to the second speed stage, because the protrusion 152 rotating in the direction A makes contact with the cam surface 116a and the auxiliary guide portion 115b moves in the axial direction, the shift member 112 moves in the axial direction from the position to which the shift member 112 has been guided due to the contact between the guide groove 142 and the pin portion 114b. The auxiliary guide portion 115b of the shift member 112 may be shaped to have only one cam surface 116a. When the slide gear 41 is at a drive meshed position relative to the shift gear 31 or 33, the protrusion 151 or 153 makes contact with the cam surface 116a of the auxiliary guide portion 115a. When the slide gear 42 is at a drive meshed position relative to the shift gear 32, the protrusion 152 makes contact with the cam surface 116a of the auxiliary guide portion 115b. The cam surfaces 116a of the auxiliary guide portions 115a and 115b are used also for moving the slide gears 41 and 42 from the drive meshed position to the coast meshed position.

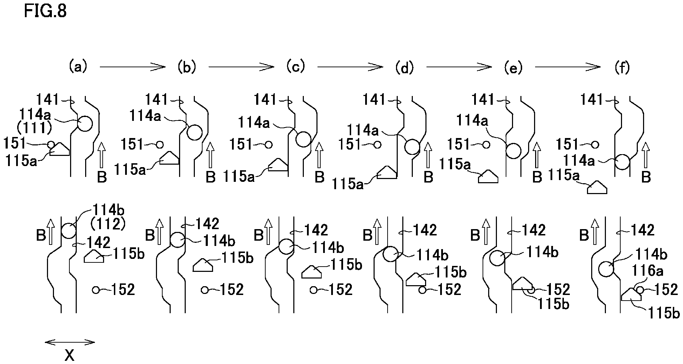

The following will describe movement of the shift members 111 and 112 and the slide gears 41 and 42 when drive shift up from the first speed stage to the second speed stage is performed, with reference to FIG. 8(a) to FIG. 8(f). The drive shift up is shift up by which a drive torque is transmitted by the transmission 1 at the start and finish of shift up. An outlined arrow B in FIG. 8 indicates the rotational direction of the shift drum 130. FIG. 8(a) shows a state in which the drive shift up starts, whereas FIG. 8(f) shows a state in which the drive shift up finishes. In FIG. 8(a), the slide gear 41 connected to the shift member 111 and the first speed gear 31 are in the drive meshed state. When the clutch 2 is in the connection state, the controller starts the rotation in the direction B of the shift drum 130 by driving the shift actuator in the state shown in FIG. 8(a). As shown in FIG. 8(c) to FIG. 8(e), the shift member 112 moves in the axial direction as the pin portion 114b makes contact with the guide groove 142. As a result, the slide gear 42 and the second speed gear 32 become in the drive meshed state. As shown in FIG. 8(e), the swinging portion 118 of the auxiliary guide portion 115b of the shift member 112 makes contact with the protrusion 152 and swings. On the other hand, the pin portion 114a of the shift member 111 moves in the circumferential direction relative to the guide groove 141, as shown in FIG. 8(a) to FIG. 8(d). In FIG. 8(d), because an end portion in the axial direction of the pin portion 114a makes contact with the guide groove 141, movement of the slide gear 41 in the axial direction toward the first speed gear 31 is restricted. In FIG. 8(d), the transmission 1 is in the double-meshed state. On this account, while the movement of the slide gear 41 in the axial direction toward the first speed gear 31 is restricted, the slide gear 41 rotates at a higher speed than the first speed gear 31. As a result, due to the contact between the release guide surface 59 of the dog 51 of the slide gear 41 and the dog 61 of the first speed gear 31, the slide gear 41 moves away from the first speed gear 31 against the elastic force exerted by the slide gear biasing spring 81 of the slide gear pressing member 80 in contact with the cam surface 71. Accordingly, as shown in FIG. 8(d) and FIG. 8(e), the shift member 111 moves in the axial direction. In FIG. 8(e), the meshing between the slide gear 41 and the first speed gear 31 has been canceled.

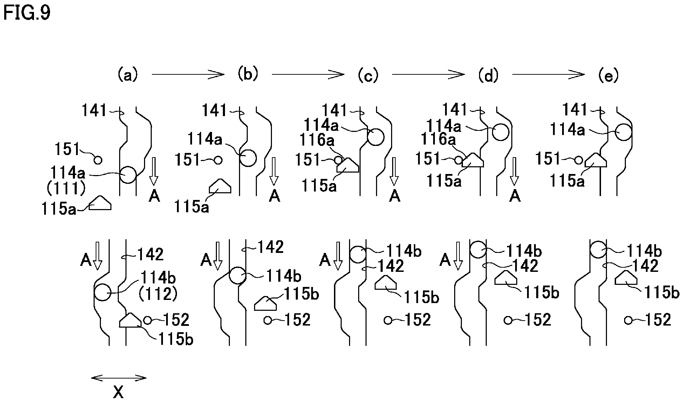

The following will describe movement of the shift members 111 and 112 and the slide gears 41 and 42 when coast shift down from the second speed stage to the first speed stage is performed, with reference to FIG. 9(a) to FIG. 9(e). The coast shift down is a shift down by which a coast torque is transmitted by the transmission 1 at the start and finish of shift down. An outlined arrow A in FIG. 9 indicates the rotational direction of the shift drum 130. FIG. 9(a) shows a state in which the coast shift down starts, whereas FIG. 9(e) shows a state in which the coast shift down finishes. In FIG. 9(a), the slide gear 42 connected to the shift member 112 and the second speed gear 32 are in the coast meshed state. In the state shown in each of FIG. 9(a), the controller switches the clutch 2 from the connection state to the cut-off state. As a result, even though the coast meshing surface 58 is in contact with the coast meshing surface 68, the slide gear 42 is able to move away from the second speed gear 32 in the axial direction. The controller starts the rotation in the direction A of the shift drum 130 by driving the shift actuator in the state shown in each of FIG. 9(a). As shown in FIG. 9(a) to FIG. 9(c), the shift member 112 moves in the axial direction as the pin portion 114b makes contact with the guide groove 142. Due to this, the meshing between the slide gear 42 and the second speed gear 32 is canceled. On the other hand, to begin with, the shift member 111 moves in the axial direction as the pin portion 114a makes contact with the guide groove 141, as shown in FIG. 9(a) to FIG. 9(c). As a result, the slide gear 41 moves to the drive meshed position or a position substantially identical with the drive meshed position. Thereafter, as shown in FIG. 9(c) and FIG. 9(d), the shift member 111 moves in the axial direction due to the contact between the cam surface 116a of the auxiliary guide portion 115a and the protrusion 151. After the protrusion 151 reaches the end of the cam surface 116a, the shift member 111 moves in the axial direction as shown in FIG. 9(d) and FIG. 9(e) due to the elastic force of the slide gear biasing spring 81. In other words, the shift member 111 moves so that the slide gear 41 and the first speed gear 31 mesh further deeply, on account of the elastic force of the slide gear biasing spring 81 exerted to the slide gear 41 on account of the contact between the cam surface 71 of the slide gear 41 and the slide gear pressing member 80. In FIG. 9(e), the slide gear 41 is at a coast meshed position relative to the first speed gear 31. In the state shown in FIG. 9(e), the controller controls the clutch 2 to be in the connection state. As a result of this, the coast torque is transmitted to the transmission 1 and the slide gear 41 and the first speed gear 31 are in the coast meshed state.

As shown in FIG. 9(b), when the meshing between the second speed gear 32 and the slide gear 42 is canceled, the slide gear 41 rotates at a higher speed than the first speed gear 31. When the slide gear 41 rotating at a higher speed than the first speed gear 31 is moved in the axial direction toward the first speed gear 31, the dog 61 of the first speed gear 31 may make contact with the release guide surface 59 of the slide gear 41, and hence the slide gear 41 may not move smoothly. To avoid this, the controller may perform below-described relative rotation control after the meshing between the second speed gear 32 and the slide gear 42 is canceled and before the meshing between the first speed gear 31 and the slide gear 41 starts. In other words, in the state shown in FIG. 9(b), the controller is performing this relative rotation control. The relative rotation control is control to switch the clutch 2 to a semi-connection state after slightly increasing the rotation speed of the engine. The semi-connection state is a state in which the clutch 2 transmits power but the power transmission rate is smaller than the maximum rate. With this relative rotation control, the rotation speed of the first speed gear 31 is increased and the difference in rotation speed between the first speed gear 31 and the slide gear 41 is decreased. Therefore, the slide gear 41 is smoothly moved to the coast meshed position.

The controller rotates the shift drum 130 to a rotation angle at the finish of the shift down or a rotation angle close to the rotation angle at the finish of the shift down, by driving the shift actuator. Alternatively, the controller may rotate the shift drum 130 to a rotation angle at the start of the relative rotation control or a rotation angle close to the rotation angle at the start of the relative rotation control, by driving the shift actuator.

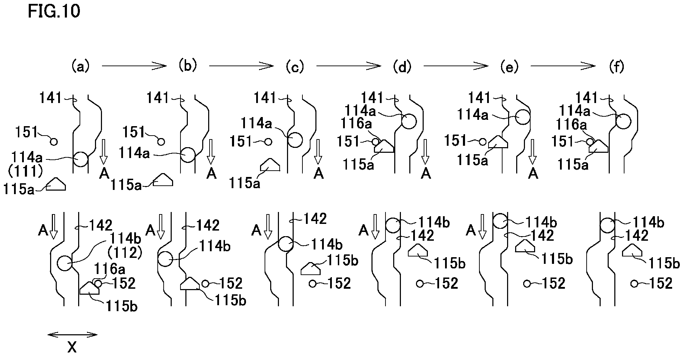

The following will describe movement of the shift members 111 and 112 and the slide gears 41 and 42 when drive shift down from the second speed stage to the first speed stage is performed, with reference to FIG. 10(a) to FIG. 10(f). The drive shift down is shift down by which a drive is transmitted by the transmission 1 at the start and finish of shift down. An outlined arrow A in FIG. 10 indicates the rotational direction of the shift drum 130. FIG. 10(a) shows a state in which the drive shift down starts, whereas FIG. 10(f) shows a state in which the drive shift down finishes. In FIG. 10(a), the slide gear 42 connected to the shift member 112 and the second speed gear 32 are in the drive meshed state. In the state shown in each of FIG. 10(a), the controller switches the clutch 2 from the connection state to the cut-off state. As a result, the meshing between the drive meshing surfaces 57 and 67 of the slide gear 42 and the second speed gear 32 is canceled. On account of the elastic force exerted by the slide gear biasing spring 81 of the slide gear pressing member 80 in contact with the cam surface 71, and other factor, the slide gear 42 moves in the axial direction from the drive meshed position to the coast meshed position. Accordingly, as shown in FIG. 10(a) and FIG. 10(b), the shift member 112 moves in the axial direction.

The force by which the slide gear 42 is moved from the drive meshed position to the coast meshed position may include a force described below. When the slide gear 42 moves from the coast meshed position to the drive meshed position relative to the second speed gear 32 before the start of the drive shift down, the shift drum 130 rotates in the direction B against the elastic force of the stopper spring in the same manner as in shifting up, due to the contact between the protrusion 152 and the cam surface 116a of the auxiliary guide portion 115b. On this account, when the clutch 2 is switched to the cut-off state, the shift drum 130 rotates in the direction A due to the elastic force of the stopper spring. At this stage, due to the contact between the protrusion 152 and the cam surface 116a of the auxiliary guide portion 115b, the elastic force of the stopper spring functions as a force of moving the shift member 112 in the axial direction. The stopper spring is provided to maintain the rotational angle of the shift drum 130 to be identical with the rotational angle at which the slide gears 41 and 42 are in the coast meshed position.

In the state shown in FIG. 10(a) or FIG. 10(b), the controller starts to drive shift actuator. As shown in FIG. 10(b) to FIG. 10(d), the shift member 112 moves in the axial direction as the pin portion 114b makes contact with the guide groove 142. Due to this, the meshing between the slide gear 42 and the second speed gear 32 is canceled.

The movement of the shift member 111 from the state shown in FIG. 10(b) to the state shown in FIG. 10(e) is identical with the movement of the shift member 111 from state shown in FIG. 9(a) to the state shown in FIG. 9(e). In FIG. 10(e), the slide gear 41 is at a coast meshed position relative to the first speed gear 31. In the state shown in FIG. 10(e), the controller switches the clutch 2 from cut-off state to the connection state and increases the engine rotation speed. As a result, the slide gear 41 rotates at a slower speed than the first speed gear 31, and the movement guiding surface 69 of the dog 61 of the first speed gear 31 makes contact with the dog 51 of the slide gear 41. As a result, as shown in FIG. 10(e) and FIG. 10(f), the shift member 111 and the slide gear 41 move in the axial direction and the slide gear 41 and the first speed gear 31 become in the drive meshed state. For the same reason as in the case of performing the coast shift down from the second speed stage to the first speed stage, the controller may perform the relative rotation control in the state shown in FIG. 10(c). As a result, the slide gear 41 is smoothly moved to the coast meshed position. The rotational angle of the shift drum 130 driven by the shift actuator is identical with that in the case of the coast shift down from the second speed stage to the first speed stage.

When the above-described relative rotation control is performed so that the first speed gear 31 rotates at a higher speed than the slide gear 41, the shift down may be completed in the state shown in FIG. 10(d). To be more specific, in the state shown in FIG. 10(d), the controller switches the clutch 2 from either the cut-off state or the semi-connection state to the connection state and increases the engine rotation speed. In this case, the movement in the axial direction of the shift member 111 due to the contact between the cam surface 116a of the auxiliary guide portion 115a and the protrusion 151 does not occur or scarcely occurs.

Although a detailed explanation will not be given, the accumulative distance of the movement in the axial direction of the shift member 112 due to the movement in the axial direction of the auxiliary guide portion 115b on account of the contact between the auxiliary guide portion 115b and the protrusion 152 at the time of coast shift up from the first speed stage to the second speed stage is equal to or longer than the accumulative distance of the movement in the axial direction of the shift member 112 due to the movement in the axial direction of the auxiliary guide portion 115b on account of the contact between the auxiliary guide portion 115b and the protrusion 152 at the time of the drive shift up from the first speed stage to the second speed stage. The coast shift up is shift up by which a coast torque is transmitted by the transmission 1 at the start and finish of shift up. In the coast shift up, when the slide gear 42 moves from the drive meshed position to the coast meshed position relative to the shift gear 32, the movement in the axial direction of the shift member 112 due to the movement in the axial direction of the auxiliary guide portion 115b on account of the contact between the cam surface 116a of the auxiliary guide portion 115b and the protrusion 152 may or may not occur. The accumulative distance of the movement in the axial direction of the shift member 112 due to the movement in the axial direction of the auxiliary guide portion 115b on account of the contact between the auxiliary guide portion 115b and the protrusion 152 at the time of coast shift up from the first speed stage to the second speed stage is equal to or shorter than the accumulative distance of the movement in the axial direction of the shift member 112 due to the movement in the axial direction of the auxiliary guide portion 115b on account of the contact between the auxiliary guide portion 115b and the protrusion 152 at the time of the coast shift down from the second speed stage to the first speed stage.

In the Fourth Embodiment, the movement of the shift member 111 when shifting up from the first speed stage to the second speed stage, the movement of the shift member 112 when shifting up from the second speed stage to the third speed stage, and the movement of the shift member 111 when shifting up from the third speed stage to the fourth speed stage are identical. The movement of the shift member 112 when shifting up from the first speed stage to the second speed stage and the movement of the shift member 111 when shifting up from the second speed stage to the third speed stage are identical with one another. The movement of the shift member 111 when shifting down from the second speed stage to the first speed stage, the movement of the shift member 112 when shifting down from the third speed stage to the second speed stage, and the movement of the shift member 111 when shifting down from the fourth speed stage to the third speed stage are identical with one another. The movement of the shift member 112 when shifting down from the second speed stage to the first speed stage and the movement of the shift member 111 when shifting down from the third speed stage to the second speed stage are identical with one another.

In the Fourth Embodiment, the protrusion 152 and the auxiliary guide portion 115b are arranged such that shift down from the third speed stage to the second speed stage occurs with movement in the axial direction of the auxiliary guide portion 115b due to the contact between the protrusion 152 and the auxiliary guide portion 115b, and shift up, during which the double-meshed state is temporarily established, from the first speed stage to the second speed stage occurs without or substantially without the movement in the axial direction of the auxiliary guide portion 115b due to the contact between the protrusion 152 and the auxiliary guide portion 115b.

In the Fourth Embodiment, the protrusion 153 and the auxiliary guide portion 115a are arranged such that shift down from the fourth speed stage to the third speed stage without movement of the auxiliary guide portion 115a in the axial direction due to the contact between the protrusion 153 and the auxiliary guide portion 115a, and shift up from the second speed stage to the third speed stage occurs without or substantially without the movement in the axial direction of the auxiliary guide portion 115a due to the contact between the protrusion 153 and the auxiliary guide portion 115a.

### <Fifth Embodiment>

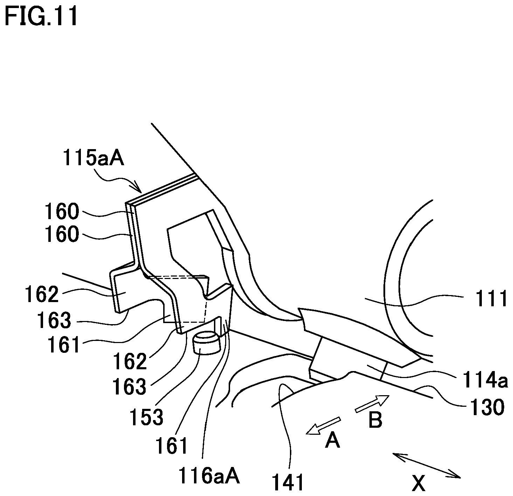

Hereinafter, the Fifth Embodiment of the present teaching will be described with reference to FIG. 11. A shift member 111 of a transmission 1 of the Fifth Embodiment includes an auxiliary guide portion 115aA in place of the auxiliary guide portion 115a. The auxiliary guide portion 115aA is a specific example of the second contact portion 115 of the First Embodiment and the Second Embodiment. Except this, the shift member 111 is identical with that of the Fourth Embodiment. Although not illustrated, a shift member 112 includes an auxiliary guide portion similar to the auxiliary guide portion 115aA, in place of the auxiliary guide portion 115b. Apart from the arrangement of the second contact portion of the present teaching, the transmission 1 of the Fifth Embodiment is identical with the transmission 1 of the Fourth Embodiment.

The auxiliary guide portion 115aA includes two plate springs 160 aligned in the axial direction. Each plate spring 160 includes a leaning portion 161 and a side plate portion 162. In other words, the auxiliary guide portion 115aA has two leaning portions 161 and two side plate portions 162. Each leaning portion 161 leans in the axial direction relative to a circumferential direction centered on the rotational central axis of the shift drum 130. Among the two surfaces of the leaning portion 161, a surface oriented in the direction B is a cam surface 116aA. In other words, the auxiliary guide portion 115aA has two cam surfaces 116aA. Each cam surface 116aA is formed at an end portion in the direction B of the auxiliary guide portion 115aA. An end in the direction B of each leaning portion 161 is a free end of the plate spring. The auxiliary guide portion 115aA is arranged to be deformed in such a way that, when a force in the direction B is exerted to the leaning portion 161, the leaning direction of the leaning portion 161 gets close to a direction orthogonal to the axial direction. The two side plate portions 162 are connected to the end portions in the direction A of the two leaning portions 161. The two side plate portions 162 extend along a direction substantially orthogonal to the axial direction. The auxiliary guide portion 115aA is deflected and deformed when a force with which the auxiliary guide portion 115aA is compressed in the axial direction is exerted to the leaning portion 161.

The transmission 1 of the Fifth Embodiment is arranged such that, when the slide gear 41 is at the drive meshed position or the coast meshed position relative to the shift gear 31 or the shift gear 33, the protrusion 151 or 153 is aligned with the side plate portion 162 in the axial direction, when viewed in the radial direction of the shift drum 130. When the slide gear 41 is at the drive meshed position relative to the shift gear 31 or the shift gear 33, the protrusion 151 or 153 is in a space between the two side plate portions 162, when viewed in the radial direction of the shift drum 130. When the slide gear 41 is at the coast meshed position relative to the shift gear 31 or the shift gear 33, the protrusion 151 or 153 is in a space outside the two side plate portions 162, when viewed in the radial direction of the shift drum 130. The auxiliary guide portion 115aA has two cutout portions 163 that are formed to prevent the protrusions 151 and 153 from making contact with the auxiliary guide portion 115aA when the slide gear 41 moves between the drive meshed position and the coast meshed position. The cutout portion 163 is formed across the entirety of the side plate portion 162 in the circumferential direction of the shift drum 130.

The following will describe the movement of the shift member 111 when changing to the third speed stage or changing from the third speed stage. The movement of the shift member 111 when changing to the first speed stage or changing from the first speed stage is not explained below, because it is substantially identical with the movement of the shift member 111 when changing to the third speed stage or changing from the third speed stage.

To begin with, the movement of the shift member 111 when the drive shift up from the second speed stage to the third speed stage will be described. Due to the contact between the pin portion 114a and the guide groove 141, the shift member 111 moves in the axial direction so that the slide gear 41 approaches the shift gear 33. During this movement, when viewed in the radial direction of the shift drum 130, the protrusion 153 rotating in the direction B enters between the two side plate portions 162. When viewed in the radial direction of the shift drum 130, in a state in which the protrusion 153 is aligned with the two side plate portions 162 in the axial direction, the slide gear 41 and the shift gear 33 are in the drive meshed state. In this shift up, the auxiliary guide portion 115aA does not make contact with the protrusion 153. On this account, in the shift up, the shift member 111 does not move in the axial direction due to the movement in the axial direction of the auxiliary guide portion 115aA on account of the contact between the auxiliary guide portion 115aA and the protrusion 153.

Although not detailed, the contact between the auxiliary guide portion 115aA and the protrusion 153 does not occur when the coast shift up from the second speed stage to the third speed stage is performed. On this account, in the shift up, the shift member 111 does not move in the axial direction due to the movement in the axial direction of the auxiliary guide portion 115aA on account of the contact between the auxiliary guide portion 115aA and the protrusion 153.

The movement of the shift member 111 when the drive shift up from the third speed stage to the fourth speed stage will be described. The protrusion 153 rotating in the direction B passes between the two side plate portions 162 and makes contact with the leaning portion 161. In so doing, the auxiliary guide portion 115aA is deformed in such a way that the leaning direction of the leaning portion 161 gets close to a direction orthogonal to the axial direction. For this reason, the shift member 111 does not move in the axial direction. Thereafter, the protrusion 153 passes between the two leaning portions 161. On this account, in the shift up, the shift member 111 does not move or scarcely moves in the axial direction due to the movement in the axial direction of the auxiliary guide portion 115aA on account of the contact between the auxiliary guide portion 115aA and the protrusion 153.

The movement of the shift member 111 when the coast shift up from the third speed stage to the fourth speed stage will be described. Due to the contact between the pin portion 114a and the guide groove 141, the shift member 111 moves in the axial direction so that the slide gear 41 moves away from the shift gear 33 (i.e., rightward in the figure). At this stage, the protrusion 153 passes through a space outside the two side plate portions 162 and a space outside the two leaning portions 161, in the direction B. On this account, in the shift up, the shift member 111 does not move in the axial direction due to the movement in the axial direction of the auxiliary guide portion 115aA on account of the contact between the auxiliary guide portion 115aA and the protrusion 153.

The following will describe the movement of the shift member 111 when drive shift down or the coast shift down from the fourth speed stage to the third speed stage is performed. Due to the contact between the pin portion 114a and the guide groove 141, the shift member 111 moves in the axial direction so that the slide gear 41 approaches the shift gear 33 (i.e., leftward in the figure). During this movement, the protrusion 153 rotating in the direction A makes contact with the cam surface 116aA of the leaning portion 161. Thereafter, as the protrusion 153 makes contact with the cam surface 116aA of the leaning portion 161 and the auxiliary guide portion 115aA moves in the axial direction, the shift member 111 moves in the axial direction from the position to which the shift member 111 has been guided due to the contact between the guide groove 141 and the pin portion 114a. In other words, the shift member 111 moves in the axial direction so that the slide gear 41 approaches the shift gear 33. Thereafter, the protrusion 153 moves away from the leaning portion 161 in the direction A. In the coast shift down, the shift down is completed in this state. In the drive shift down, in this state, the controller switches the clutch 2 from either the cut-off state or the semi-connection state to the connection state and increases the engine rotation speed. Thereafter, by a function of the movement guiding surface 69, the slide gear 41 moves from the coast meshed position to the drive meshed position. At this stage, when viewed in the radial direction of the shift drum 130, the protrusion 153 passes through the cutout portion 163 and enters the space between the two side plate portions 162.

The following will describe the movement of the shift member 111 when drive shift down or coast shift down from the third speed stage to the second speed stage is performed. After the protrusion 153 moves away from the side plate portion 162 in the direction A, the shift member 111 moves in the axial direction so that the slide gear 41 moves away from the shift gear 33, due to the contact between the pin portion 114a and the guide groove 141. In this shift down, the protrusion 153 does not make contact with the auxiliary guide portion 115aA.

In the Fifth Embodiment, the protrusion 153 and the auxiliary guide portion 115aA are arranged so that the auxiliary guide portion 115aA moves in the axial direction due to the contact between the protrusion 153 and the auxiliary guide portion 115aAwhen shifting down from the fourth speed stage to the third speed stage, and shifting up from the second speed stage to the third speed stage occurs without or substantially without the movement in the axial direction of the auxiliary guide portion 115aA due to the contact between the protrusion 153 and the auxiliary guide portion 115aA. In the Fifth Embodiment, the rotational angle of the shift drum 130 when the slide gear 41 or the slide gear 42 is in the drive meshed state is identical with the rotational angle of the shift drum 130 when the slide gear 41 or the slide gear 42 is in the coast meshed state.

The transmission 1 of each of the Fourth Embodiment and the Fifth Embodiment is a six-speed transmission. However, the transmission of the present teaching is not limited to a six-speed transmission. The transmission 1 of each of the Fourth Embodiment and the Fifth Embodiment is arranged so that, at the time of shift up to the second speed stage, shift up to the third speed stage, and shift up to the fourth speed stage, a double-meshed state is temporarily established, whereas, at the time of shift up to the fifth speed stage and shift up to the sixth speed stage, the double-meshed state is not established. When the transmission of the present teaching is a six-speed transmission, the speed stage after the completion of shift up with which the double-meshed state is temporarily established may not be the second speed stage, the third speed stage, or the fourth speed stage. The transmission of the present teaching is arranged so that the double-meshed state is temporarily established when shifting up to at least one speed stage. When the transmission of the present teaching is arranged so that the double-meshed state is temporarily established when shifting up, the transmission is arranged so that the double-meshed state is not established when shifting down.

In the Fourth Embodiment and the Fifth Embodiment, two slide gears may be provided in place of the slide gear 23. The transmission 1 may be arranged so that the double-meshed state is temporarily established when shifting up to the fifth speed stage or shifting up to the sixth speed stage. To be more specific, for example, among these slide gears, at least one cam surface 71 and a checking groove 72 may be provided in the slide gear for the fifth speed stage. In this case, the slide gear pressing member 80 is provided on the input shaft 11. These two slide gears may have dogs that are provided at end portions opposing the shift gears 35 and 36 in the axial direction and have a common feature as the dogs 51 to 54. The dogs 65 and 66 of the shift gears 35 and 36 may have a common feature as the dogs 61 to 64 of the shift gears 31 to 34. In the guide groove 142 of the shift drum 130, a wide portion may be provided for the fourth speed stage. In the guide groove 143 of the shift drum 130, a wide portion may be provided for the fifth speed stage. To the shift drum 130, a pin portion (first contact portion) for the fourth speed stage and a pin portion (first contact portion) for the fifth speed stage may be added. The shift member connected to the slide gear meshing with the shift gear 35 by a dog may be arranged to include the second contact portion of the present teaching.

In the Fourth Embodiment and the Fifth Embodiment, the protrusions 151 to 153 are equivalent to the first contact portion of the present teaching, and the auxiliary guide portions 115a, 115b, and 115aA are equivalent to the second contact portion of the present teaching. The first contact portion and the second contact portion of the present teaching are not limited to the arrangement described above. When the second contact portion of the present teaching is constituted by a plate spring, the second contact portion is not limited to the auxiliary guide portion 115aA.

In the Fourth Embodiment and the Fifth Embodiment, the second contact portion (auxiliary guide portion) has a cam surface in the same manner as in the Second Embodiment. Alternatively, the first contact portion has a cam surface in the same manner as in the Third Embodiment. In this case, the transmission may be arranged such that, when shifting down from the (n+1)-th speed stage to the n-th speed stage, the second contact portion moves in the axial direction due to the contact between the cam surface of the first contact portion and the second contact portion, and when shifting up from the (n-1)-th speed stage to the n-th speed stage, the double-meshed state is temporarily established.

### [Reference Signs List]

1 transmission
10 power transmission shaft
11 input shaft (power transmission shaft)
12 output shaft (power transmission shaft)
23 slide gear
40 slider
41, 42 slide gear (slider)
30, 31 to 36 shift gear
51 to 56 and 61 to 66 dog
110, 111, 112, 113 shift member
114, 114a, 114b pin portion
115 second contact portion
115a, 115b, 115aA auxiliary guide portion (second contact portion)
116, 116a, 116aA cam surface of second contact portion
130 shift drum
140, 141, 142, 143 guide groove
140a wide portion
150 first contact portion
150a cam surface of first contact portion
151, 152, 153 protrusion (first contact portion)

## Claims

1. A transmission comprising:
a slider which is provided on a power transmission shaft on which a shift gear is provided, is movable in an axial direction, and is driven to move in the axial direction in order to change a speed stage;
a shift member which is integrally movable with the slider in the axial direction; and
a shift drum which has an outer circumferential portion having a guide groove in which a pin portion of the shift member is provided, and which is arranged to move the shift member in the axial direction in accordance with a position of the guide groove with which the pin portion makes contact, when the shift drum rotates about a rotational central axis in parallel to the axial direction, wherein,
the shift drum includes a first contact portion which is provided at the outer circumferential portion of the shift drum so as to be at a position remote from the guide groove and which is arranged to rotate integrally with the shift drum,
the shift member includes a second contact portion which is provided at a position remote from the pin portion, which is arranged to move in the axial direction integrally with the shift member, and which is arranged to move in the axial direction due to contact with the rotating first contact portion when the shift drum rotates in a first direction,
the guide groove has a wide portion which has a groove width in the axial direction which is wider than the width in the axial direction of the pin portion, in order to allow the pin portion to move in the guide groove in the axial direction when the second contact portion moves in the axial direction due to contact between the second contact portion and the first contact portion which is rotating on account of the rotation of the shift drum in the first direction, and
the transmission is arranged to move the shift member in the axial direction from a position to which the shift member has been guided due to contact between the guide groove and the pin portion, because the second contact portion moves in the axial direction due to contact between the rotating first contact portion and the second contact portion when the shift drum rotates in the first direction.

2. The transmission according to claim 1, wherein,
the first contact portion or the second contact portion has a cam surface that is formed to convert a rotational force of the shift drum into a force in the axial direction, and
the transmission is arranged to move the shift member in the axial direction from a position to which the shift member has been guided due to contact between the guide groove and the pin portion, because the second contact portion moves in the axial direction due to contact between the cam surface of the rotating first contact portion or the second contact portion and the second contact portion or the rotating first contact portion when the shift drum rotates in the first direction.

3. The transmission according claim 1 or 2, wherein,
the second contact portion is arranged to move in the axial direction due to contact with the rotating first contact portion, when shift down from an (n+1)-th speed stage to an n-th speed stage occurs by the rotation of shift drum in the first direction, wherein n is a natural number equal to or more than 1, and
the transmission is arranged to move the shift member in the axial direction from a position to which the shift member has been guided due to contact between the guide groove and the pin portion, because the second contact portion moves in the axial direction due to contact between the rotating first contact portion and the second contact portion when shifting down from the (n+1)-th speed stage to the n-th speed stage.

4. The transmission according to claim 3, wherein,
the shift member is arranged to move in the axial direction due to contact between the guide groove and the pin portion, when shift up from an (n-1)-th speed stage to the n-th speed stage occurs by the rotation of the shift drum in a second direction opposite to the first direction, wherein n is a natural number equal to or more than 2, and
the first contact portion and the second contact portion are arranged such that the shift up from the (n-1)-th speed stage to the n-th speed stage occurs (i) without movement in the axial direction of the second contact portion due to contact between the rotating first contact portion and the second contact portion or (ii) with movement in the axial direction of the second contact portion due to contact between the rotating first contact portion and the second contact portion, by a distance that is shorter than the distance of movement in the axial direction of the second contact portion due to contact between the first contact portion and the second contact portion when shifting down from the (n+1)-th speed stage to the n-th speed stage.

5. The transmission according to claim 3 or 4, further comprising:
two power transmission shafts including the power transmission shaft;
shift gears which include the shift gear, which are provided on the two power transmission shafts, and each of which is rotatable relative to one of the two power transmission shafts and is immovable in the axial direction;
sliders which include the slider, which are provided on the two power transmission shafts, each of which is integrally rotatable with one of the two power transmission shafts and movable in the axial direction, each of which includes a dog capable of meshing with a dog of a shift gear neighboring the each slider in the axial direction, and which are driven in the axial direction to change the speed stage; and
shift members which include the shift member and which are integrally movable with the respective sliders in the axial direction, wherein,
the shift drum has the outer circumferential portion having guide grooves which include the guide groove and in which pin portions of the shift members are provided,
the transmission is arranged such that, when shift up from the (n-1)-th speed stage to the n-th speed stage occurs by the rotation of the shift drum in a second direction opposite to the first direction, the transmission is temporarily in a double-meshed state where two of the sliders simultaneously mesh with two shift gears of the shift gears by the dogs, wherein n is a natural number equal to or more than 2, and
the transmission is arranged such that, when the transmission is in the double-meshed state, a force of canceling meshing by the dogs is generated in one of the two sliders.
